(19) Europäisches Patentamt
European Patent Office
Office européen des brevets

(11) **EP 1 552 331 B1**

(12) # EUROPEAN PATENT SPECIFICATION

(45) Date of publication and mention
of the grant of the patent:
**06.10.2010 Bulletin 2010/40**

(51) Int Cl.:
**G02B 6/44** (2006.01)

(21) Application number: **03774599.9**

(22) Date of filing: **07.10.2003**

(86) International application number:
**PCT/US2003/031708**

(87) International publication number:
**WO 2004/034115 (22.04.2004 Gazette 2004/17)**

(54) **OPTICAL CABLE COMPONENTS**

KOMPONENTEN FÜR OPTISCHEN KABEL

COMPOSANTES DE CABLE OPTIQUE

(84) Designated Contracting States:
**AT BE BG CH CY CZ DE DK EE ES FI FR GB GR HU IE IT LI LU MC NL PT RO SE SI SK TR**

(30) Priority: **07.10.2002 US 421129 P**
**23.04.2003 US 464695 P**

(43) Date of publication of application:
**13.07.2005 Bulletin 2005/28**

(73) Proprietor: **DOW GLOBAL TECHNOLOGIES INC.**
**Midland MI 48674 (US)**

(72) Inventors:
• **BROWN, Geoffrey David**
**Bridgewater, NJ 08807 (US)**
• **WASSERMAN, Scott Hanley**
**Morganville, NJ 07751 (US)**
• **HARE, Marie L.**
**Lake Jackson, Texas 77566 (US)**
• **WHETTEN, Alan R.**
**Manvel, Texas 77578 (US)**
• **PANG, Kawai, Peter**
**Belle Mead**
**New Jersey 08502 (US)**
• **ROZENBLAT, Benjamin, R.**
**Belle Mead, NJ 08502 (US)**
• **BUNKER, Shana, P.**
**High Bridge, NJ 08829 (US)**

(74) Representative: **Hayes, Adrian Chetwynd et al**
**Boult Wade Tennant**
**Verulam Gardens**
**70 Gray's Inn Road**
**London WC1X 8BT (GB)**

(56) References cited:
**EP-A- 1 085 358     EP-A- 1 191 375**

• **STRICKER: "m-PP Blends: Processing and Properties of Blends Based on m-PP and Ethylene Copolymers" KUNSTSTOFFE PLAST EUROPA, 1998, pages 17-19, XP009028138**
• **PREMPHET ET AL: "polypropylene/metallocene ethylene-octene copolymer blends with a bimodal particle size distribution: mechanical properties and their controlling factors" JOURNAL OF APPLIED POLYMER SCIENCE, vol. 85, 2002, pages 2412-2418, XP002275412**
• **SILVA DA A L N ET AL: "RHEOLOGICAL AND THERMAL PROPERTIES OF BINARY BLENDS OF POLYPROPYLENE AND POLY(ETHYLENE-CO-1-OCTENE)" , JOURNAL OF APPLIED POLYMER SCIENCE, JOHN WILEY AND SONS INC. NEW YORK, US, VOL. 79, NR. 9, PAGE(S) 1634-1639 XP001180329 ISSN: 0021-8995 the whole document**
• **MCKENNAGHAN: "Ethylene-1-octene Polyolefin Elastomers" KGK KAUTSCUK GUMMI KUNSTSTOFFE, vol. 54, no. 10, 2001, pages 540-545, XP000118033**
• **KONTOPOULOU M ET AL: "Effect of composition and comonomer type on the rheology, morphology and properties of ethylene-alpha-olefin copolymer/polypropylene blends" , POLYMER, ELSEVIER SCIENCE PUBLISHERS B.V, GB, VOL. 44, NR. 24, PAGE(S) 7495-7504 XP004467317 ISSN: 0032-3861 the whole document**

EP 1 552 331 B1

**(Cont. next page)**

• MCNALLY T ET AL: "Rheology, phase morphology, mechanical, impact and thermal properties of polypropylene/metallocene catalysed ethylene 1-octene copolymer blends", POLYMER, ELSEVIER SCIENCE PUBLISHERS B.V, GB, VOL. 43, NR. 13, PAGE(S) 3785-3793 XP004349550 ISSN: 0032-3861 the whole document

• LING ZHANG ET AL.: "Fibrillar Morphology of Elastomer-Modified Polypropylene: Effect of Interface Adhesion and Processing Conditions" JOURNAL OF APPLIED POLYMER SCIENCE, vol. 86, 2002, pages 2085-2092, XP002275411

**Description**

This invention is directed to buffer-tube, core-tube or slotted-core fiber optic cable components made from an extrudable blend of highly crystalline polypropylene and an impact modifying polymer. When compared with conventional impact modified polypropylene technology, the extrudable blend provides a substantially more optimal balance of flexural modulus, crush resistance, impact strength, grease resistance, and low post extrusion shrinkage.

Optical fibers efficiently transmit information at high rates and over long distances. These fibers are delicate and need to be protected. In practical application, a fiber optic cable protects the fibers from mechanical damage and/or adverse environmental conditions such as moisture exposure. For example, specific protective components include extruded buffer tubes, core tubes, and slotted core members.

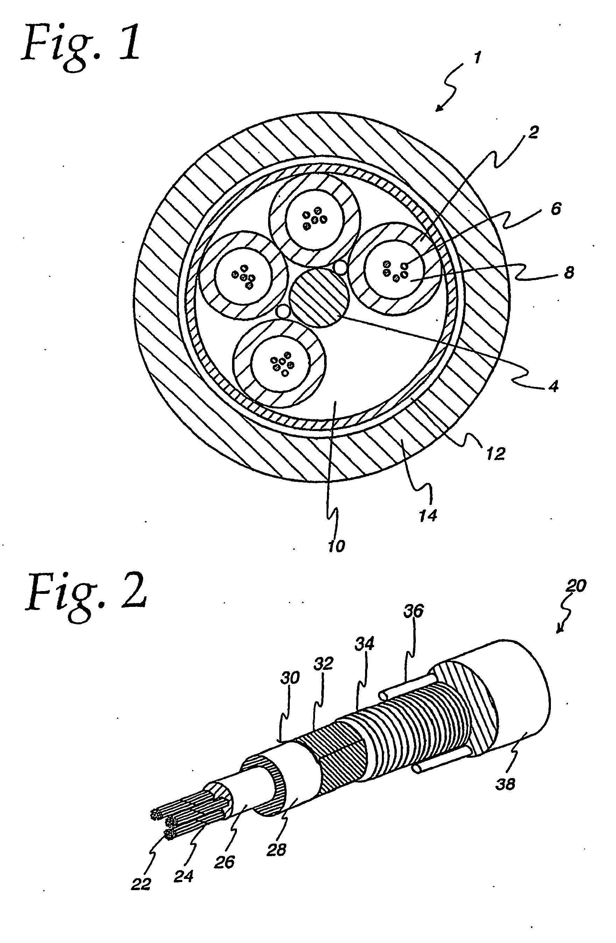

A cross-sectional view of a common loose buffer tube optic cable design is shown in Figure 1. In this design of optic cable 1, buffer tubes 2 are positioned radially around a central strength member 4, with a helical rotation to the tubes in the axial length. The helical rotation allows bending of the cable without significantly stretching the tube or the optic fibers 6.

If a reduced number of buffer tubes is required, then foamed filler rods 10 can be used as low cost spacers to occupy one or more buffer tube positions to maintain cable geometry. The cable jacket 14 is generally fabricated from a polyethylene-based material.

The buffer tubes are typically filled with an optic cable hydrocarbon-based grease 8 incorporating hydrocarbon oils surrounding the fibers and eliminating air space. This grease (also referred to as "gel") provides a barrier against water penetration, which is detrimental to the optic transmission performance.

The hydrocarbon oils of the grease are typically low molecular weight hydrocarbon oils, which can be absorbed into polymeric buffer tubes. Absorption typically adversely affects the tube's mechanical properties such as flexural modulus and crush resistance. A decrease in crush resistance renders the optic fibers more prone to mechanical stress, thereby permitting an increase in signal attenuation and increasing the possibility of catastrophic failure. Thus, good retention of modulus and crush resistance along with minimal oil absorption, commonly referred to as "grease compatibility", are important performance characteristics for polymeric materials to be used for making extruded optical protective component.

As also shown in Figure 1, components such as yarns 3 or core wraps 11 that contain water-swellable super absorbent polymers can be used to block water in the cable core. Water blocking treatments on the central strength member or ripcords to aid removal of jacketing for installation are also common. Another variation is to eliminate the buffer tube grease and employ super-absorbent water-blocking components such as powders.

Many other buffer tube cable designs are possible. The size and materials of construction for the central strength and tensile member, the dimensions and number of buffer tubes, and the use of metallic armors and multiple layers of jacketing material are among the design elements.

A cross-sectional view of a typical core-tube optic cable, also known as "central tube," is illustrated in Figure 2. Bundles 24 of the optical fibers 22 are positioned near the center of the optical cable 20 within a central, cylindrical core tube 28. The bundles are embedded in a filling material 26. Water blocking tape 32 surrounds the ripcords 30, which are on the surface of the core tube. A corrugated, coated steel cylinder 34 surrounds the tape to protect the bundles. Wire strength members 36 provide the cable with strength and stiffness. A jacket 38, which is generally fabricated from a polyethylene-based material, surrounds all of the components. In this design, the mechanical functions are incorporated into the outer sheathing system composed of the core tube, polyolefin jacketing layers, tensile and compressive strength members, metallic armors, core wraps, water blocking components, and other components.

The core tube is typically larger in diameter than a buffer tube to accommodate bundles of fibers or the use of ribbon components containing the optic fibers. Color-coded binders are typically used to bundle and identify the fibers. The core tube can contain water blocking grease or super-absorbent polymer elements surrounding the optic fiber components. The optimal material characteristics for the core tube component are often similar to those of the buffer tube application.

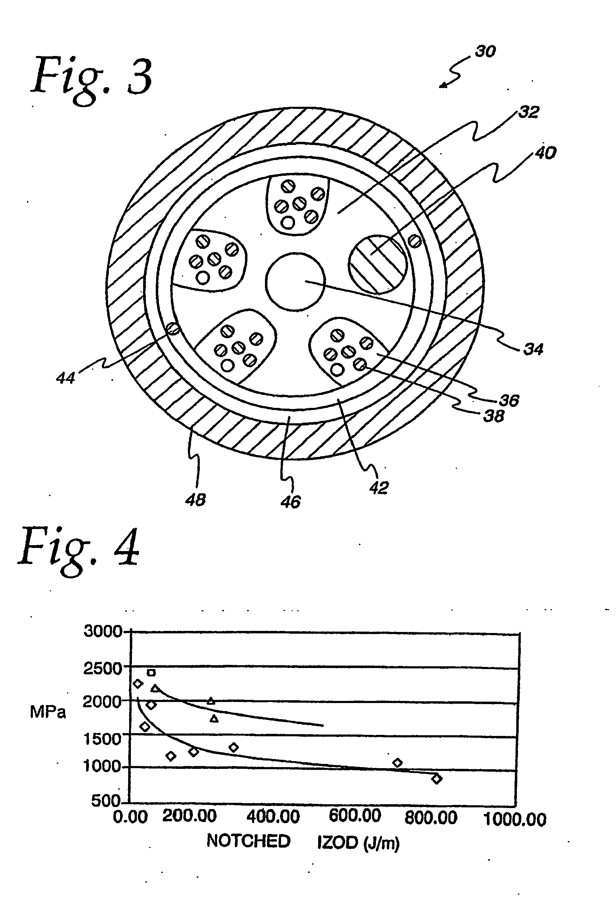

A cross-sectional view of a typical slotted-core cable design is shown in Figure 3. The optical cable 30 includes a jacket 48 and a slotted core 32, having a central member 34. The central member prevents buckling and controls axial shrinkage of the extruded slotted core profile shape. The jacket and the slotted core are typically made from a polyolefin-based material.

The slotted core has slots 36 in which optical fibers 38 are located. A filler rod 40 also may occupy one or more slots. A water blocking layer 42, which may have one or more ripcords 44, surrounds the slotted core 32. A dielectric strength member layer 46 surrounds the water blocking layer.

It is desirable that the optical cable components have high crush resistance, good grease compatibility, adequate impact performance, and good post extrusion shrinkage characteristics. Accordingly, the composition for making optical protective components should have (1) a high modulus material for good crush strength, (2) good chemical resistance to optic cable grease especially as determined with regard to loss of modulus and crush resistance, (3) good impact performance as determined by notched Izod, and (4) good post extrusion shrinkage characteristics to promote optical signal transmission.

As previously described, poor grease compatibility can be manifested by adversely affecting the protective component's mechanical properties such as flexural modulus and crush resistance.

With regard to post extrusion shrinkage, the optical fibers within the components should not show excess slack, often referred to as excess fiber length or EFL. Component shrinkage, which occurs rapidly during extrusion, typically does not contribute to EFL because the fibers are moderately tensioned. However, component shrinkage that occurs more slowly due to rheological and crystallization processes will generate EFL for fibers within the components.

It is believed that the major mechanisms for component shrinkage are (1) strain recovery from the viscoelastic stretching of the polymeric melt that occurs during the tube shaping extrusion, (2) material shrinkage as the molten tube solidifies, and (3) solid state annealing shrinkage resulting from a continuing re-crystallization of the polymeric matrix. Accordingly, the component materials should have fast relaxation of viscoelastic melt stresses and minimal annealing shrinkage.

Different polymeric materials have been tried to achieve the desired properties. For example, polybutylene terephthalate ("PBT") exhibits high stiffness, a minimal change in physical properties following conditioning in optic grease, deformation resistance (with flexural modulus >2,400 MPa), and low excess fiber length caused by post extrusion shrinkage. PBT, however, is relatively expensive on a cost per volume basis as compared to polyolefin-based compounds.

When compared to PBT, conventional polyolefins typically show a greater effect following exposure to optic grease. Among polyolefin materials, crystallinity typically improves grease compatibility.

Because high density polyethylene ("HDPE") has a lower modulus, a lower crush resistance, and an increased level of post extrusion shrinkage than PBT, special fabrication care is required to avoid high levels of excess fiber length. United States Patent Nos. 5,574,816 and 5,761,362 describe the use of nucleated impact modified propylene polymers ("IMPP") for optic buffer tubes.

Nucleating agents and lower molecular weight are believed to maximize initial crystallization and minimize subsequent annealing shrinkage respectively. United States Patent No. 3,367,926 describes nucleating agents as advantageously increasing the crystallinity of the polymers while also typically increasing the modulus.

HDPE, however, provides a better level of optic grease compatibility when compared to IMPP. Like HDPE, IMPP has a substantially lower modulus and crush resistance than PBT, especially after grease exposure.

To minimize gel absorption in IMPP, fiber optic cable makers often decide to use expensive gel filling compounds. The higher combined cost of more expensive gel and IMPP often negates the lower initial cost of IMPP itself.

Hence, even though HDPE and IMPP (initially) are lower cost than PBT, they have been limited in replacing PBT across the full range of buffer tube applications.

It is an object of the invention to provide extruded optical cable protective components made from a blend of highly crystalline polypropylene and an impact modifying polymer, wherein the components have a desired balance of stiffness, impact toughness, and grease resistance. It is another object of the present invention to provide a flexible optical fiber cable including the extruded optical cable protective components.

Another object is to provide an extrudable blend of a highly crystalline polypropylene and an impact modifying polymer, resulting in an extrudant has a 1-percent secant modulus and notched Izod value suitable for optical cable protective components.

This specification shall render other objects of the invention readily apparent to persons skilled in the art.

This invention is directed to optical cable components fabricated from an extrudable blend of high crystalline polypropylene and an impact modifying polymer to provide an enhanced balance flexural modulus, Izod notched value, grease resistance, and low shrinkage properties. The polypropylene has a crystallinity of greater than 56 weight percent and a melt flow of from 1 to 20 grams per 10 minutes at 230 degrees C. At 23 degrees C, the composition yields an extrudant having a 1-percent secant modulus of at least 1,600 MPa and a notched Izod of at least 35 J/m. The composition also yields an extruded tube having a shrinkage of less than 2.0 percent after 24 hours at 100 degrees C.

Fig. 1 shows a cross-sectional view of a loose buffer tube optical fiber cable.
Fig. 2 shows a partial cutaway view of a core tube optical fiber cable.
Fig. 3 shows a cross-sectional view of a slotted core optical fiber cable.
Fig. 4 is a comparative plot of 1-percent secant modulus versus notched Izod values.

The present invention is an extruded optical cable protective component comprising:

an extruded blend of

(a) 60 to 97 parts by weight of a crystalline Polypropylene, having a crystallinity of greater than 65 weight percent and a melt flow of from 1 to 20 grams per 10 minutes at 230 degrees C;

(b) 3 to 40 parts by weight of an impact modifying polymer selected from the group consisting of styrene-butadiene-styrene block copolymers, styrene-isoprene-styrene block polymers, acrylonitrile-butadiene rubbers, acrylonitrile-butadiene-styrene copolymers, acrylonitrile-styrene-acrylate terpolymers, ethylene/styrene interpolymers, ethylene/alpha olefin interpolymers having a density of less than 0.925g/cc, ethylene/unsaturated ester copolymers, ethylene/propylene/diene terpolymers (EPDM), and polypropylene copolymer elastomers; and

(c) a hydrocarbon oil, having a viscosity of greater than 400 centistoke as measured by ASTM D-445;

the crystalline polypropylene and impact modifying polymer being present in amounts effective for providing a test specimen prepared from the extruded blend with a 1-percent secant modulus (ASTM D-790) at 23 degrees C of at least 1,600 MPa and a Notched Izod (ASTM D-256) at 23 degrees C of at least 35 J/m.

The extrudable blend also yields an extruded tube having a shrinkage of less than 2.0 percent after 24 hours at 100 degrees C.

The highly crystalline polypropylene can be either isotactic or syndiotactic homopolymer polypropylene. Preferably, the high crystalline polypropylene is an isotactic homopolymer polypropylene, in order to maximize the crystallinity of the polymer.

The polypropylene used in the present invention is well known in the literature and can be prepared by known techniques. In general, the polypropylene can be made with Ziegler-Natta catalysts or metallocene catalysts. "Kirk-Othmer Encyclopedia of Chemical Technology" (2001) describes these catalysts and their corresponding reactor processes for making high crystalline polypropylenes.

The crystallinity of the polypropylene is measured by differential scanning calorimetry (DSC). In this measurement, a small sample of the propylene polymer is sealed into an aluminum DSC pan. The sample is placed into a DSC cell with a 25 centimeter per minute nitrogen purge and cooled to about -100 degrees C. A standard thermal history is established for the sample by heating at 10 degrees C per minute to 225 degrees C. The sample then is re-cooled to about -100 degrees C and reheated at 10 degrees C per minute to 225 degrees C. The observed heat of fusion ($\Delta H_{observed}$) for the second scan is recorded. The observed heat of fusion is related to the degree of crystallinity in weight percent based on the weight of the polypropylene sample by the following equation:

$$\text{Crystallinity percent} = (\Delta H_{observed})/(\Delta H_{isotactic\ pp}) \times 100$$

where the heat of fusion for isotactic polypropylene ($\Delta H_{isotactic\ pp}$) is reported in B. Wunderlich, Macromolecular Physics, Volume 3, Crystal Melting, Academic Press, New York, 1960, p 48, as 165 Joules per gram (J/g) of polymer.

In a preferred aspect of the invention, the high crystalline polypropylene has a crystallinity greater than 65 percent, more preferably greater than 70 percent, and most preferably, greater than 73 percent. United States Provisional Patent Application Serial No. 60/416,632, filed October 7, 2002, discloses an example of a high crystalline polypropylene useful in the present invention.

The high crystalline polypropylene has a melt flow rate between 1 and 20 grams per 10 minutes. Preferably, the melt flow is between 1 and 12, more preferably between 2 and 9, even more preferably between 2 and 8, and most preferably between 3 and 6. Melt flow rate is measured at 230 degrees C in accordance with ASTM D 1238-01 test method.

At the extrusion modeling and testing conditions described herein, the preferred compositions will exhibit post extrusion shrinkage of less than 2.0 percent after 24 hours at 100 degrees C.

The crystalline polypropylene is present in the blend in an amount from 60 to 97 parts by weight.

A nucleating agent can be used with the highly crystalline polypropylene of the present invention. Examples of suitable nucleating agents include ADK NA-11 and ADK NA-21, which are available commercially from Asahi Denka Kokai. Other examples include the nucleating agents described in United States Patent Nos. 3,367,926 and 5,574,816. Persons of ordinary small in the art can readily identify other useful nucleating agents. The nucleating agents are typically incorporated into the highly crystalline polypropylene at levels of at least 500 ppm, preferably at least 650 ppm, and more preferably at least 750 ppm.

As used herein, the term impact modifying polymer" includes a broad range of polymers. The impact modifying polymer allows the high crystalline based polypropylene based formulation to absorb mechanical energy without fracture and thereby imparts sufficient impact toughness for the fiber optic cable applications. Examples of impact modifying polymers are styrenobutadie-styrene block copolymers, styrene-isoprene-styrene block copolymers, acrylonitirile-butadiene rubbers, acrylonitrile-butadiene-styrene copolymers, acrylonitrile-styrene-acylate terpolymers, ethylene/styrene interpolymers, ethylene/alpha olefin interpolymers having a density of less than 0.925g/cc, ethylene/unsaturated ester copolymers, ethylene/propylene/diene terpolymers (EPDM), and polypropylene copolymer elastomers such as ethylene-propylene rubbers, and mixtures thereof.

Examples of the ethylene/unsaturated ester copolymers are ethylene vinyl acetate (EVA), ethylene methyl acrylate (EMA), and ethylene acrylic acid (EAA). Further examples of propylene copolymer elastomers s are described in "Polypropylene Handbook: Polymerization, Characterization, Properties, Applications," pp. 3-14, 113-176 (E. Moore, Jr. ed., 1996).

Preferably, the impact modifying polymer is a natural or synthetic rubber.

As used herein, ethylene/alpha olefin interpolymers are interpolymers of ethylene and alpha olefins having 2 to 12 carbon atoms. The ethylene/alpha olefin interpolymers useful in the present invention include low density and very low density ethylene polymers. The blend of high crystalline propylene polymers and low density ethylene/alpha olefin interpolymers provides an unique combination of high flexural modulus and adequate toughness that are not duplicated by conventional polypropylene technology.

Preferably, the ethylene/alpha olefin interpolymers will have a density less than 0.90 grams per cubic centimeter.

Linear ethylene/alpha olefin polymers and substantially linear ethylene/alpha olefin polymers such as ethylene/ 1-octene and/or ethylene/butene copolymers are also useful in the present invention. Bthylene/1-octene copolymers are preferred because they can add toughness to the blend while minimizing the decrease in flexural modulus. An example of a suitable copolymer is Affinity EP 8100, an ethylene/1-octeno copolymer having a 190 degrees C melt index ($I_2$) of 1.0 g/10 min and density of 0.877 g/ml, available from The Dow Chemical Company.

Where the ethylene/alpha olefin polymer is a substantially linear polyethylene, that term refers to homogeneously branched ethylene polymers (interpolymers and homopolymers) which possess a narrow short chain branching distribution and contain long chain branches as well as short chain branches attributable to homogeneous comonomer incorporation. The long chain branches are of the same structure as the backbone of the polymer and are longer than the short chain branches. Substantially linear alpha olefin polymers have from 0.01 to 3 long chain branch/1000 carbons. Preferred substantially linear polymers for use in the invention have from 0.01 long chain branch/1000 carbons to 1 long chain branch/1000 carbons, and more preferably from 0.05 long chain branch/1000 carbons to 1 long chain branches/ 1000 carbons. These polymers are elastomers, which are polymeric chains that are able to alter their arrangements and extensions in space in response to an imposed stress.

The impact modifying polymer may be thermoplastic or crosslinked by means known to those skilled in the art. Crosslinking the impact modifying polymer can reduce the absorption of hydrocarbon oils and the resulting loss of modulus and crush resistant properties.

Preferred impact modifying polymers will improve impact performance and extrusion surface smoothness. Moreover, preferred impact modifying polymers will not adversely affect post extrusion shrinkage characteristics or modulus/crush characteristics to a significant degree. Also, preferred impact modifying polymers will facilitate good cable grease compatibility at the target loading in the crystalline polypropylene.

Also, preferably, the impact modifying polymers will have low susceptibility to hydrocarbon oil absorption. Using an impact modifying polymer based upon its higher crystallinity and/or polar constituents can reduce the diffusion and absorption of low molecular weight species, typically hydrocarbon oils, which generally are in fiber optical cable grease.

Preferably, the impact modifying polymer is present in the blend in an amount from 3 to 40 parts by weight.

Performance boosting co-additives may enhance the properties of the impact modifying polymers. Suitable co-additives include chemical or polymeric coupling or compatibilizing agents, which can enhance the impact properties of the polymer blend by improving the interfacial cohesion between the high crystalline polypropylene phase and the impact modifying polymer phase.

Use of coupling agents like acrylic acid grafted and/or maleic anhydride grafted polypropylene is well known in the literature, such information can be found in H. G. Karian, "Handbook of Polypropylene and Propylene Composites," pp.39-80 (1999).

In addition, it is advantageous to include a hydrocarbon oil as a third component in the extrudable blends of highly crystalline polypropylene and impact modifying polymer. This additional component reduces subsequent diffusion and absorption of undesirable low molecular weight species typically found in fiber optical cable grease, thereby improving the balance between impact performance and gel compatibility.

Preferably, the hydrocarbon oil is present in the extrudable blends in an amount between 0.2 weight percent and 10 weight percent. More preferably, the hydrocarbon oil is between 0.3 weight percent and 3.0 weight percent.

Higher molecular weight hydrocarbon oils are more preferable than low molecular weight hydrocarbon oils. The hydrocarbon oil has a viscosity greater than 400 centistoke as measured by ASTM D-445. Preferably, the hydrocarbon oil will have a specific gravity between 0.86 and 0.90 as measured by ASTM D-1250. Also, preferably, the hydrocarbon oil will have a flash point greater than 300 degrees Celsius as measured by ASTM D-92. Also, preferably, the

hydrocarbon oil will have a pour point greater than -10 degrees Celsius as measured by ASTM D-97. Also, preferably, the hydrocarbon oil will have an aniline point between 80 degrees Celsius and 300 degrees Celsius as measured by ASTM D-611.

The blend can include a particulate filler such as glass fibers or various mineral fillers including nano-composities. Fillers, especially those with elongated or platelet-shaped Particles providing a higher aspect ratio (length/thickness), may improve modulus and post extrusion shrinkage characteristics.

The composition can include other additives and modifiers such as extrusion processing aids, colorants, antioxidants, other stabilizers, coupling agents, surfactants, crosslinking agents, and plasticizers. The composition can include additional resin components.

In a second embodiment, the present invention is directed to optical fiber cables that include at least one extruded optical protective component made from the highly crystalline polypropylene/impact modifying polymer blend described herein and incorporating at least one optical fiber transmission medium.

In yet another embodiment, the present invention is a method of making an extruded optical protective component by extruding the highly crystalline polypropylene/impact modifying polymer blend described herein.

The optical fiber cable of the invention is typically made in a series of sequential manufacturing steps. Optical transmission fibers are manufactured in the initial step. The fibers can have a polymeric coating for mechanical protection. These fibers can be assembled into bundles or ribbon cable configurations or can be directly incorporated into the cable fabrication.

Optical protective components are manufactured using extrusion fabrication process. Typically, a single screw plasticating extruder discharges a fluxed and mixed polymer under pressure into a wire and cable cross-hesd. The cross-head turns the melt flow perpendicular to the extruder and shapes the flow into the molten component.

For buffer and core tubes, one or more optic fibers or fiber assemblies and grease are fed into the back of the cross-head and exit the cross-head within the molten tube that is then cooled and solidified in a water trough system. This component is eventually collected as a finished component on a take-up reel.

To fabricate components comprised of two or more material layers, there typically would be separate plasticating extruders feeding the melt compositions into a multi-layer cross-head where it is shaped into the desired multi-layer construction.

Slotted core members and other profile extrusion components would typically be extruded in a similar profile extrusion process incorporating an appropriate shaping die, and then subsequently combined with the optical fiber components to fabricate the finished cable.

To control EFL, a tensioning system is used to feed the fiber components into the tube fabrication process. In addition, component materials selection, the tube extrusion and cross-head equipment, and processing conditions are optimized to provide a finished component where post extrusion shrinkage does not result in excessive slack in the optic fiber components.

The extruded optical protective components, along with other components such as central components, armors, wraps, are then subsequently processed in one or more steps to produce the finished cable construction. This typically includes processing on a cabling line where the components are assembled with a fabricating extruder/crosshead then used to apply the polymeric jacketing.

It should be understood, however, that those skilled in the art can make variations in this manufacturing process without departing from the spirit and scope of the invention.

Examples

The following non-limiting examples illustrate the invention.

Examples 1-3 represent the invention, showing examples of the high crystalline polypropylene with elastomeric modification compositions. Comparative Example 4 represents PBT material currently used commercially. Comparative Example 5 represents typical conventional impact modified PP technology currently used commercially.

Shrinkage is measured and tested on an extruded wire sample that has been subject to 100 degrees C for 24 hours. Surface smoothness of an extruded sample is measured by a Mitutoyo Surftest profilometer. One-percent Secant modulus is measured according to ASTM test D-790. Notched Izod is measured according to ASTM test D-256. Generally the notched Izod test is an impact test in which a falling pendulum strikes a fixed, usually a notched specimen with 163 Joules (120 foot-pounds) of energy at a velocity of 3.5 meters (11.5 feet) per second. The height of the pendulum swing after striking is a measure of the energy absorbed and indicates impact strength.

The highly crystalline polypropylene of Examples 1-3 are made as follows:

Example 1

A polypropylene homopolymer is produced in a single, continuous bulk phase (condensed propylene) stirred tank reactor. A Ziegler-Natta catalyst, which includes a titanium catalytic active metal species supported on a magnesium chloride support, which is commercially available as Toho-JC and may be purchased from Toho Titanium Ltd., is suspended in Kaydol white mineral oil, purchased from Witco, at 38 weight percent and stored in a stirred catalyst feed tank. The suspended catalyst is pumped directly into a nominal 25,000 gallon continuous, stirred tank reactor, which is filled to approximately 2/3 capacity with liquid propylene.

The desired temperature of the reactor is 65-68 degrees C controlled by condensing propylene vapor in a separate set of heat exchangers and returning the liquid stream to the reactor along with the non-condensable fraction. An external alkoxysilane donor, which is commercially available from Degmsa-Huels, $[(CH_2)_4CH]_2Si(OMe)_2$, is fed continuously to the reactor in the amount needed to reduce the xylene extractable fraction to less than 1 percent, as measured by ASTM method D 790-00. The target concentration of the external donor in the liquid propylene, corrected for solids, is 150 ppm. Undiluted aluminum alkyl cocatalysts, (triethylaluminum, $AlEt_3$ commonly called TEAL) are added to the propylene feed stream to adjust the TEAL concentration in the liquid propylene to a control target of 150 ppm in the liquid propylene.

A polypropylene polymerization is conducted with the reactor polymer solids at 40-42 weight percent. A chain transfer agent, hydrogen, is continuously fed to the reactor, to produce a 4.5 MFR polypropylene polymer, as measured by ASTM D 1238-01. The reactor discharge stream is degassed in a series of three vessels to separate the liquid propylene and process lights from the polypropylene powder product. The degassed powder then is forwarded to a ribbon blender/heater in 1814 kg (4000 lb.) batches.

The copolymer final product is made by introducing 9 percent by weight of a commercial rubber Affinity™ EP 8100, an ethylene/1-octene polyethylene copolymer having a melt index ($I_2$) of 0.75-1.25 g/10 min, a density of about 0.877 g/ml, and an $I_2/I_{10}$ ratio of about 7.6 into the ribbon blender. Affinity EP 8100 is available from The Dow Chemical Company.

Other additives are also introduced into the ribbon blender. A nucleator /clarifier additive or agent ADK NA-11 at 1500 ppm, which is a complex organophosphate metal salt, is commercially available from Amfine Chemical Corp. Stabilizer additives, including an acid scavenger such as calcium stearate or DHT-4A hydrotalcide, and antioxidants such as hindered phenolics and phosphite are also added to the composition as needed to provide good stabilization for the melt fabrication processes and long term aging performance.

After mixing in the ribbon blender, the composition is fed into a single screw extruder for compounding (melting/ mixing) and pelleting.

To model the crush resistance of buffer tube materials, specimens were prepared by extruding the respective materials onto 14 gauge copper solid conductor wire. The wire samples had an outside diameter of about 3.3 mm (0.13") and a wall thickness of 0.76 mm (0.03"). The copper conductor was then removed from specimens by drawing down the copper conductor.

The specimens were then aged by immersion in the cable grease (gel) with conditioning in a circulating air oven using the industry standard of 45 days at 85 degrees C. After the grease immersion aging, the specimens were removed from the grease, their outer surface wiped with dry tissue, and then cooled down to room temperature (about 23 degrees C).

The wire samples were then tested for 1-percent secant modulus using an Instron machine at a crosshead speed of 25 mm/min. Drawn down pieces of the 14 gauge copper conductor (with diameter of ca. 1.5 mm) were inserted into each end of wire samples prior to clamping the test specimens on the Instron machine to provide improved clamping capability. The reported value for each material was an average of five samples.

Example 2

Equivalent sample preparation to Example 1, except that a 17percent loading of the Affinity EP 8100 impact modifier is added to the composition via the ribbon blender.

Example 3

Equivalent sample preparation to Example 1, except that a 15.6percent loading of the Affinity EP 8100 impact modifier and an 8.0percent loading of talc are added to the composition via the ribbon blender.

Comparative Example 4

A PBT material, Celanex 2001, which is commercially available from Ticona to fabricate optic buffer tubes, was used.

Comparative Example 5

An IMPP material, Acutuf 3240, which is commercially available from BP-Amoco to fabricate optic buffer tubes, was used.

The testing results are shown in Table I and Figure 4. In Figure 4, the data concerning the invention is plotted as triangles (Δ), conventional polypropylene as diamonds ( ) and PBT as a square ( ).

TABLE I

| Raw Materials | Example 1 | Example 2 | Example 3 | Comp. Ex. 4 | Comp. Ex. 5 |
|---|---|---|---|---|---|
| Highly Crystalline Polypropylene | 91.0 | 83.0 | 76.4 | | |
| PBT | | | | 100.0 | |
| Impact Polypropylene | | | | | 100.0 |
| Linear Elastomer | 9.0 | 17.0 | 15.6 | | |
| Talc | | | 8.0 | | |
| Properties | | | | | |
| One-Percent Secant Modulus at 23 degrees C (MPa) | 2172 | 1731 | 1986 | 2414 | 1310 |
| Notched Izod at 23 degrees C (J/m) | 64.1 | 214 | 203 | 53.4 | about 200 |
| One-Percent Secant Modulus at 23 degrees C after 85 degrees C for 45 days in LA444 gel (MPa) | 1326 | 863 | 903 | 2414 | 729 |
| Shrinkage after 24 hours at 100 degrees C (percent) | 1.37 | 1.31 | 1.16 | 1.52 | 1.41 |
| Surface smoothness (microns) | 2.7 | 3.7 | 4.7 | 1.5 | 3.6 |

**Claims**

1.  An extruded optical cable protective component comprising:

    an extruded blend of

    (a) 60 to 97 parts by weight of a crystalline polypropylene, having a crystallinity of greater than 65 weight percent and a melt flow of from 1 to 20 grams per 10 minutes at 230 degrees C.
    (b) 3 to 40 parts by weight of an impact modifying polymer selected from the group consisting of styrene-butadiene-styrene block copolymers, styrene-isoprene-styrene block polymers, acrylonitrile-butadiene rubbers, acrylonitrile-butadiene-styrene copolymers, acrylonitrile-styrene-acrylate terpolymers, ethylene/styrene interpolymers, ethylene/alpha olefin interpolymers having a density of less than 0.925g/cc, ethylene/unsaturated ester copolymers, ethylene/propylene/diene terpolymers (EPDM), and polypropylene copolymer elastomers; and
    (c) a hydrocarbon oil, having a viscosity of greater than 400 centistoke as measured by ASTM D-445;

    the crystalline polypropylene and impact modifying polymer being present in amounts effective for providing a test specimen prepared from the extruded blend with a 1-percent secant modulus (ASTM D-790) at 23 degrees C of at least 1,600 MPa and a Notched Izod (ASTM D-256) at 23 degrees C of at least 35 J/m.

2.  The extruded optical cable protective component of claim 1 wherein the impact modifying polymer, has polar functionality, thereby reducing hydrocarbon oil absorption to provide improved gel compatibility performance.

3.  The extruded optical cable protective component of claim 1 wherein the extruded component is a tube having a shrinkage of less than 2.0 percent after 24 hours at 100 degrees C.

4.  An optical fiber cable comprising:

    (a) the extruded optical cable protective component of claim 1, and
    (b) at least one optical fiber transmission medium.

5.  A method of making the extruded optical cable protective component of claim 1 comprising:

9

(a) extruding a blend of

(i) 60 to 97 parts by weight of a crystalline polypropylene, having a crystallinity of greater than 65 weight percent and a melt flow of from 1 to 20 grams per 10 minutes at 230 degrees C:
(ii) 8 to 40 parts by weight of an impact modifying polymer selected from the group consisting of styrene-butadiene-styrene block copolymers, styrene-isoprene-styrene block polymers, acrylonitrile-butadiene rubbers, acrylonitrile-butadiene-styrene copolymers, acrylonitrile-styrene-acrylate terpolymers, ethylene/styrene interpolymers, ethylene/alpha olefin interpolymers having a density of less than 0.925g/cc, ethylene/unaacurated ester copolymers, ethylene/propylene/diene terpolymers (EPDM), and polypropylene copolymer elastomers; and
(iii) a hydrocarbon oil, having a viscosity of greater than 400 centistoke as measured by ASTM D-445;

wherein the crystalline polypropylene and impact modifying polymer being present in amounts effective for providing a test specimen prepared from the extruded blend with a 1-percent secant modulus (ASTM D-790) at 23 degrees C of at least 1.600 MPa and a Notched Izod (ASTM D-256) at 23 degrees C of at least 35 J/m.

**Patentansprüche**

1. Extrudierte Schutzkomponente für ein optisches Kabel, umfassend:

eine extrudierte Mischung von

(a) 60 bis 97 Gewichtsteilen eines kristallinen Polypropylens mit einer Kristallinität größer als 65 Gew.-% und einem Schmelzfluss von 1 bis 20 Gramm pro 10 Minuten bei 230°C,
(b) 3 bis 40 Gewichtsteilen eines schlagzäh modifizierenden Polymers aus der Gruppe der Styrol-Butadien-Styrol-Blockcopolymere, Styrol-Isopren-Styrol-Blockpolymere, Acrylnitril-Butadien-Kautschuke, Acrylnitril-Butadien-Styrol-Copolymere, Acrylnitril-Styrol-Acrylat-Terpolymere, Ethylen/Styrol-Interpolymere, Ethylen/$\alpha$-Olefin-Interpolymere mit einer Dichte kleiner als 0,925 g/cm$^3$, Copolymere von Ethylen und ungesättigtem Ester, Ethylen/Propylen/Dien-Terpolymere (EPDM) und Polypropylencopolymer-Elastomere; und
(c) einem Kohlenwasserstofföl mit einer Viskosität größer als 400 Centistoke, gemessen nach ASTM D-445;

wobei das kristalline Polypropylen und das schlagzäh modifizierende Polymer in wirksamen Mengen vorhanden sind, um einer aus der extrudierten Mischung hergestellten Probe einen 1%-Sekantenmodul (ASTM D-790) bei 23°C von mindestens 1600 MPa und eine Izod-Kerbschlagzähigkeit (ASTM D-256) bei 23°C von mindestens 35 J/m zu verleihen.

2. Extrudierte Schutzkomponente für ein optisches Kabel nach Anspruch 1, wobei das schlagzäh modifizierende Polymer eine polare Funktionalität hat, wodurch die Aufnahme von Kohlenwasserstofföl verringert wird, um eine verbesserte Leistung hinsichtlich der Gelkompatibilität bereitzustellen.

3. Extrudierte Schutzkomponente für ein optisches Kabel nach Anspruch 1, wobei die extrudierte Komponente ein Schlauch mit einer Schrumpfung von weniger als 2,0 Prozent nach 24 Stunden bei 100°C ist.

4. Faseroptisches Kabel, umfassend:

(a) die extrudierte Schutzkomponente für ein optisches Kabel nach Anspruch 1, und
(b) mindestens ein faseroptisches Übertragungsmedium.

5. Verfahren zur Herstellung der extrudierten Schutzkomponente für ein optisches Kabel nach Anspruch 1, mit dem folgenden Schritt:

(a) Extrudieren einer Mischung von

(i) 60 bis 97 Gewichtsteilen eines kristallinen Polypropylens mit einer Kristallinität größer als 65 Gew.-% und einem Schmelzfluss von 1 bis 20 Gramm pro 10 Minuten bei 230°C,
(ii) 3 bis 40 Gewichtsteilen eines schlagzäh modifizierenden Polymers aus der Gruppe der Styrol-Butadien-Styrol-Blockcopolymere, Styrol-Isopren-Styrol-Blockpolymere, Acrylnitril-Butadien-Kautschuke, Acrylnitril-Butadien-Styrol-Copolymere, Acrylnitril-Styrol-Acrylat-Terpolymere, Ethylen/Styrol-Interpolymere, Ethylen/$\alpha$-Olefin-Interpolymere mit einer Dichte kleiner als 0,925 g/cm$^3$, Copolymere von Ethylen und ungesättigtem Ester, Ethylen/Propylen/Dien-Terpolymere (EPDM) und Polypropylencopolymer-Elastomere; und

(iii) einem Kohlenwasserstofföl mit einer Viskosität größer als 400 Centistoke, gemessen nach ASTM D-445;

wobei das kristalline Polypropylen und das schlagzäh modifizierende Polymer in wirksamen Mengen vorhanden sind, um einer aus der extrudierten Mischung hergestellten Probe einen 1%-Sekantenmodul (ASTM D-790) bei 23°C von mindestens 1600 MPa und eine Izod-Kerbschlagzähigkeit (ASTM D-256) bei 23°C von mindestens 35 J/m zu verleihen.

**Revendications**

1. Composant extrudé de protection de câble optique, comprenant un mélange extrudé constitué :

 a) de 60 à 97 parties en poids d'un polypropylène cristallin, qui présente un taux de cristallinité de plus de 65 % en poids et un indice d'écoulement à l'état fondu, à 230 °C, de 1 à 20 grammes par 10 minutes ;
 b) de 3 à 40 parties en poids d'un polymère modificateur de résistance au choc, choisi dans l'ensemble formé par les suivants : copolymères à blocs styrène-butadiène-styrène, copolymères à blocs styrène-isoprène-styrène, caoutchoucs à base d'acrylonitrile et de butadiène, copolymères d'acrylonitrile, de butadiène et de styrène, terpolymères d'acrylonitrile, de styrène et d'acrylate, interpolymères d'éthylène et de styrène, interpolymères d'éthylène et d'alpha-oléfine présentant une masse volumique inférieure à 0,925 g/cm$^3$, copolymères d'éthylène et d'ester insaturé, terpolymères d'éthylène, de propylène et de diène (EPDM), et élastomères copolymères de type polypropylène ;
 c) et d'une huile d'hydrocarbures dont la viscosité, mesurée selon la norme ASTM D-445, vaut plus de 400 centistokes ;

 étant entendu que le polypropylène cristallin et le polymère modificateur de résistance au choc se trouvent présents en des quantités qui ont pour effet de permettre de préparer, à partir du mélange extrudé, un spécimen d'essai qui présente, à 23°C, un module sécant à 1 % (norme ASTM D790) d'au moins 1600 MPa, et à 23 °C, une résistance au choc Izod sur barreau entaillé (norme ASTM D-256) d'au moins 35 J/m.

2. Composant extrudé de protection de câble optique, conforme à la revendication 1, dans lequel le polymère modificateur de résistance au choc comporte des groupes fonctionnels polaires, ce qui entraîne une réduction de l'absorption d'huile d'hydrocarbures et par là une amélioration des performances de compatibilité vis-à-vis d'un gel.

3. Composant extrudé de protection de câble optique, conforme à la revendication 1, lequel composant extrudé est un tube qui présente, après 24 heures de séjour à 100 °C, un taux de retrait inférieur à 2,0 %.

4. Câble à fibre(s) optique(s), comprenant :

 a) un composant extrudé de protection de câble optique, conforme à la revendication 1,
 b) et au moins un moyen de transmission de type fibre optique.

5. Procédé de fabrication d'un composant extrudé de protection de câble optique, conforme à la revendication 1, lequel procédé comporte :

 a) le fait d'extruder un mélange constitué

 i) de 60 à 97 parties en poids d'un polypropylène cristallin, qui présente un taux de cristallinité de plus de 65 % en poids et un indice d'écoulement à l'état fondu, à 230 °C, de 1 à 20 grammes par 10 minutes ;
 ii) de 3 à 40 parties en poids d'un polymère modificateur de résistance au choc, choisi dans l'ensemble formé par les suivants : copolymères à blocs styrène-butadiène-styrène, copolymères à blocs styrène-isoprène-styrène, caoutchoucs à base d'acrylonitrile et de butadiène, copolymères d'acrylonitrile, de butadiène et de styrène, terpolymères d'acrylonitrile, de styrène et d'acrylate, interpolymères d'éthylène et de styrène, interpolymères d'éthylène et d'alpha-oléfine présentant une masse volumique inférieure à 0,925 g/cm$^3$, copolymères d'éthylène et d'ester insaturé, terpolymères d'éthylène, de propylène et de diène (EPDM), et élastomères copolymères de type polypropylène ;

iii) et d'une huile d'hydrocarbures dont la viscosité, mesurée selon la norme ASTM D-445, vaut plus de 400 centistokes ;

étant entendu que le polypropylène cristallin et le polymère modificateur de résistance au choc se trouvent présents en des quantités qui ont pour effet de permettre de préparer, à partir du mélange extrudé, un spécimen d'essai qui présente, à 23 °C, un module sécant à 1 % (norme ASTM D790) d'au moins 1600 MPa, et à 23 °C, une résistance au choc Izod sur barreau entaillé (norme ASTM D-256) d'au moins 35 J/m.

# Fig. 1

# Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5574816 A
- US 5761362 A
- US 3367926 A
- US 60416632 B

**Non-patent literature cited in the description**

- Kirk-Othmer Encyclopedia of Chemical Technology. 2001
- **B. Wunderlich.** Macromolecular Physics. Crystal Melting, Academic Press, 1960, vol. 3, 48
- Polypropylene Handbook: Polymerization, Characterization, Properties, Applications. 1996, 3-14113-176
- **H. G. Karian.** Handbook of Polypropylene and Propylene Composites. 1999, 39-80